# EUROPEAN PATENT SPECIFICATION

(11) **EP 3 812 179 B1**
(45) Date of publication and mention of the grant of the patent: **08.02.2023**
(21) Application number: 20200778.7
(22) Date of filing: 08.10.2020
(51) Int. Cl.: B60C 15/06, C08L 1/02

(54) **TIRE WITH BEAD REINFORCEMENT**
REIFEN MIT WULSTVERSTÄRKUNG
PNEU AVEC RENFORCEMENT DU TALON

(30) Priority: 21.10.2019 JP 2019192124
(43) Date of publication of application: 28.04.2021
(73) Proprietor: Sumitomo Rubber Industries, Ltd., Kobe-shi, Hyogo-ken 651-0072 (JP)
(72) Inventor: AOKI, Daisuke, Kobe-shi, Hyogo 651-0072 (JP); IMAI, Daiki, Kobe-shi, Hyogo 651-0072 (JP)
(74) Representative: Manitz Finsterwald Patent- und Rechtsanwaltspartnerschaft mbB

(56) References cited:
- EP-A1- 2 184 184
- JP-A- 2003 146 029
- JP-A- 2005 053 451
- JP-A- 2010 149 677

## Description

### BACKGROUND OF THE INVENTION

### Field of the Invention

The present invention relates to a tire including a carcass and a reinforcing layer.

### Description of the Background Art

To date, a tire that includes a carcass extending on and between a pair of bead cores and a pair of reinforcing layers extending along the carcass, has been known. For example, Japanese Laid-Open Patent Publication No. 2018-052236 suggests a tire in which a hard strip apex as a reinforcing layer extends outwardly from a bead along a carcass in the radial direction.

However, in the tire suggested in Japanese Laid-Open Patent Publication No. 2018-052236, although the hard reinforcing layer is disposed to enhance steering stability, such a hard reinforcing layer causes degradation of ride comfort.

A tire in accordance with the preamble of claim 1 is known from JP 2003 146029 A. Related tires are known from JP 2005 053451 A and EP 2 184 184 A1.

The present invention has been made in view of the aforementioned circumstances, and a main object of the present invention is to provide a tire that allows both steering stability and ride comfort to be achieved at a high level.

### SUMMARY OF THE INVENTION

The present invention is directed to a tire including: a carcass extending on and between a pair of bead cores; and a pair of reinforcing layers extending along the carcass. The carcass includes at least one carcass ply having a body portion extending on and between the pair of bead cores, and turned-up portions connected to the body portion and turned up around the bead cores. Each of the reinforcing layers includes at least one anisotropic sheet in which viscoelasticity in a tire circumferential direction and viscoelasticity in a tire radial direction are different from each other. An outer end of the anisotropic sheet in the tire radial direction is disposed between the body portion and a corresponding one of the turned-up portions.

In the tire of the present invention, a distance in the tire radial direction between the outer end of the anisotropic sheet and an end portion of a corresponding one of the turned-up portions is preferably 3 to 15 mm.

In the tire of the present invention, an inner end of the anisotropic sheet in the tire radial direction is preferably disposed outwardly of a tire-radially outer surface of a corresponding one of the bead cores in the tire radial direction.

In the tire of the present invention, a distance in the tire radial direction between the inner end of the anisotropic sheet and the outer surface of a corresponding one of the bead cores is preferably 3 to 15 mm.

The tire of the present invention further includes a pair of bead apex rubbers extending outwardly from the bead cores, respectively, in the tire radial direction. The inner end of the anisotropic sheet in the tire radial direction is disposed between the body portion and a corresponding one of the bead apex rubbers.

In the tire of the present invention, the outer end of the anisotropic sheet is disposed outwardly of a tire-radially outer end of a corresponding one of the bead apex rubbers in the tire radial direction.

In the tire of the present invention, in the anisotropic sheet, a complex elastic modulus Ea* at 70°C in the tire circumferential direction is preferably greater than a complex elastic modulus Eb* at 70°C in the tire radial direction.

In the tire of the present invention, in the anisotropic sheet, the complex elastic modulus Ea* at 70°C in the tire circumferential direction is preferably 110% to 170% of the complex elastic modulus Eb* at 70°C in the tire radial direction.

In the tire of the present invention, the anisotropic sheet preferably includes a biomass nanomaterial.

In the tire of the present invention, the biomass nanomaterial preferably includes nanocellulose.

In the tire of the present invention, each reinforcing layer has at least one anisotropic sheet in which viscoelasticity in the tire circumferential direction and viscoelasticity in the tire radial direction are different from each other. In the reinforcing layer having such a structure, stiffness can be made different between the tire circumferential direction and the tire radial direction. Therefore, both the steering stability to which stiffness in the tire circumferential direction greatly contributes, and the ride comfort to which stiffness in the tire radial direction greatly contributes can be achieved.

In the tire of the present invention, the outer end of the anisotropic sheet in the tire radial direction is disposed between the body portion and the turned-up portion. The anisotropic sheet having such a structure allows stiffness to be ensured near the outer end of the anisotropic sheet, thereby further improving steering stability. Therefore, the tire of the present invention allows both steering stability and ride comfort to be achieved at a high level.

### BRIEF DESCRIPTION OF THE DRAWINGS

FIG. 1 is a cross-sectional view of a tire according to one embodiment of the present invention;
FIG. 2 is an enlarged cross-sectional view of a bead portion;
FIG. 3 is an enlarged cross-sectional view of a tire according to another embodiment; and
FIG. 4 is an enlarged cross-sectional view of a bead portion according to another embodiment.

### DESCRIPTION OF THE PREFERRED EMBODIMENTS

An embodiment of the present invention will be described below in detail with reference to the drawings.

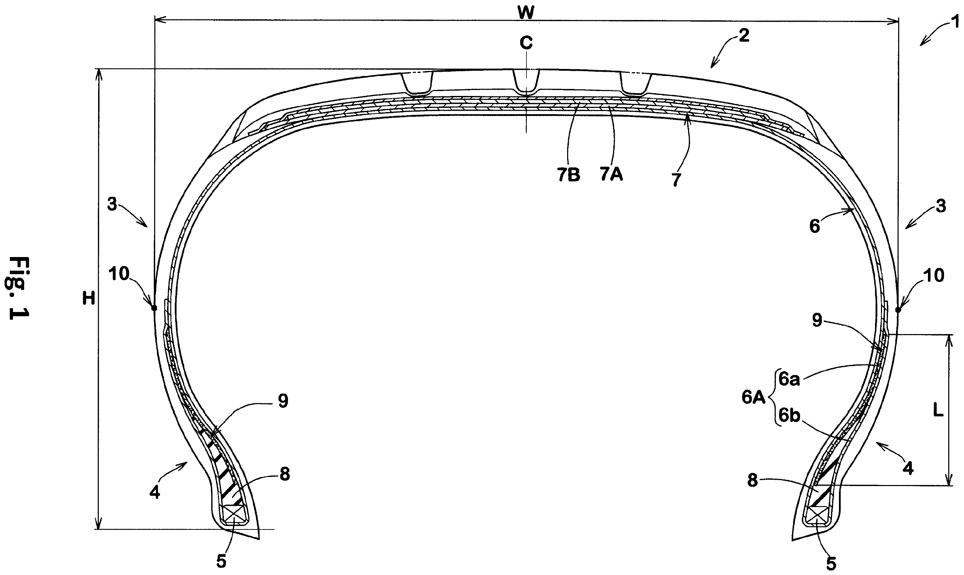

FIG. 1 shows a cross-section, of a tire 1 in a normal state, including a tire rotation axis according to the present embodiment. The tire 1 of the present embodiment is preferably used as a pneumatic tire to be mounted to a passenger car or the like. The tire 1 is not limited to a pneumatic tire for a passenger car, and is applicable as various tires such as a heavy-duty pneumatic tire or a motorcycle pneumatic tire.

The "normal state" represents a state where the tire 1 is mounted on a normal rim and is adjusted to have a normal internal pressure, and no load is applied to the tire 1. Hereinafter, unless otherwise specified, the dimensions and the like of each component of the tire 1 are indicated as values measured in the normal state.

The "normal rim" represents a rim that is defined by a standard, in a standard system including the standard with which the tire 1 complies, for each tire, and is, for example, the "standard rim" in the JATMA standard, the "Design Rim" in the TRA standard, or the "Measuring Rim" in the ETRTO standard.

The "normal internal pressure" represents an air pressure that is defined by a standard, in a standard system including the standard with which the tire 1 complies, for each tire, and is the "maximum air pressure" in the JATMA standard, the maximum value recited in the table "TIRE LOAD LIMITS AT VARIOUS COLD INFLATION PRESSURES" in the TRA standard, or the "INFLATION PRESSURE" in the ETRTO standard.

As shown in FIG. 1, the tire 1 of the present embodiment includes an annularly extending tread portion 2, a pair of sidewall portions 3 extending from both sides of the tread portion 2, and a pair of bead portions 4 extending so as to be connected with the sidewall portions 3. The tire 1 of the present embodiment includes a toroidal carcass 6 extending on and between bead cores 5 of the paired bead portions 4, and a belt layer 7 disposed outwardly of the carcass 6 in the tire radial direction and inside the tread portion 2.

The carcass 6 has at least one carcass ply 6A. In the present embodiment, the carcass 6 has one carcass ply 6A. The carcass ply 6A includes, for example, a carcass cord (not shown) arranged at an angle of 75 to 90° relative to the tire circumferential direction. As the carcass cord, for example, a cord formed of an organic fiber such as aromatic polyamide or rayon can be used.

The carcass ply 6A includes, for example, a body portion 6a extending from the tread portion 2 through the sidewall portions 3 to the bead cores 5 of the bead portions 4, and turned-up portions 6b connected with the body portion 6a. In the present embodiment, the body portion 6a extends on and between the paired bead cores 5. In the present embodiment, the turned-up portions 6b are turned up around the bead cores 5 from the inner side toward the outer side in the tire axial direction.

The belt layer 7 includes at least one belt ply. In the present embodiment, the belt layer 7 includes two belt plies 7A, 7B. The two belt plies 7A, 7B include, for example, a first belt ply 7A disposed on the inner side in the tire radial direction, and a second belt ply 7B disposed outwardly of the first belt ply 7A. The belt layer 7 having such a structure enhances stiffness of the tread portion 2 and durability of the tire 1.

In the present embodiment, the tire 1 further includes a pair of bead apex rubbers 8 extending outwardly from the bead cores 5, respectively, in the tire radial direction, and a pair of reinforcing layers 9 extending along the carcass 6. The bead apex rubber 8 is preferably disposed between the body portion 6a and the turned-up portion 6b of the carcass ply 6A.

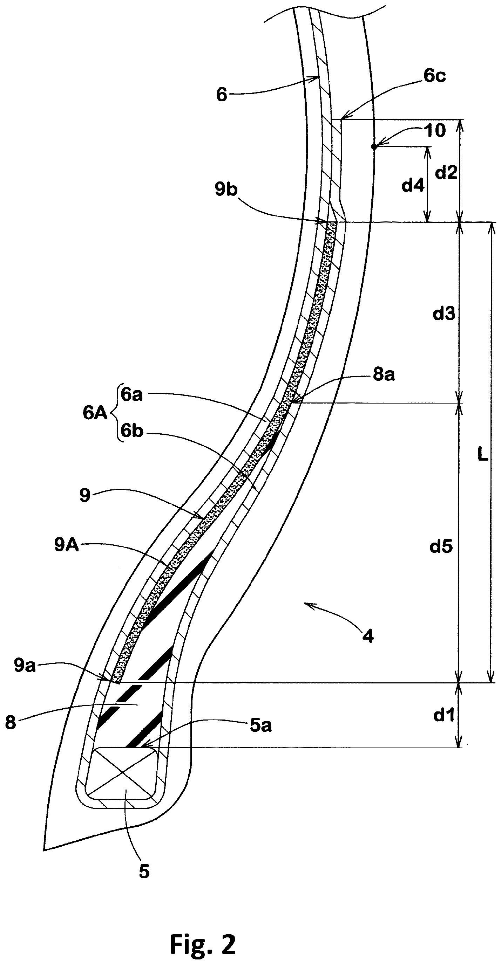

FIG. 2 is an enlarged cross-sectional view of the bead portion 4. As shown in FIG. 2, each reinforcing layer 9 has at least one anisotropic sheet 9A in which viscoelasticity in the tire circumferential direction and viscoelasticity in the tire radial direction are different from each other. In the present embodiment, each reinforcing layer 9 has one anisotropic sheet 9A. In the reinforcing layer 9 having such a structure, stiffness can be made different between the tire circumferential direction and the tire radial direction. Therefore, both the steering stability to which stiffness in the tire circumferential direction greatly contributes, and the ride comfort to which stiffness in the tire radial direction greatly contributes can be achieved. The reinforcing layer 9 may have, for example, a plurality of anisotropic sheets 9A, or may have the anisotropic sheet 9A and a known reinforcing sheet. The thickness of the anisotropic sheet 9A is preferably 0.5 to 1.2 mm.

An inner end 9a of the anisotropic sheet 9A in the tire radial direction is preferably disposed between the body portion 6a and the turned-up portion 6b of the carcass 6. In the present embodiment, an outer end 9b of the anisotropic sheet 9A in the tire radial direction is disposed between the body portion 6a and the turned-up portion 6b. The anisotropic sheet 9A having such a structure allows stiffness to be ensured near the outer end 9b of the anisotropic sheet 9A, thereby further improving steering stability. Therefore, in the present embodiment, the tire 1 allows both steering stability and ride comfort to be achieved at a high level.

In a more preferable manner, the inner end 9a of the anisotropic sheet 9A is disposed outwardly of a tire-radially outer surface 5a of the bead core 5 in the tire radial direction. The anisotropic sheet 9A having such a structure can inhibit stiffness of the bead portion 4 from becoming excessively high, thereby allowing the tire 1 to improve ride comfort.

A distance d1 in the tire radial direction between the inner end 9a of the anisotropic sheet 9A and the outer surface 5a of the bead core 5 is preferably 3 to 15 mm. In a case where the distance d1 between the inner end 9a of the anisotropic sheet 9A and the outer surface 5a of the bead core 5 is not less than 3 mm, strain occurring in the anisotropic sheet 9A can be reduced. In a case where the distance d1 between the inner end 9a of the anisotropic sheet 9A and the outer surface 5a of the bead core 5 is not greater than 15 mm, stiffness near the inner end 9a of the anisotropic sheet 9A can be ensured. From such a viewpoint, the distance d1 between the inner end 9a of the anisotropic sheet 9A and the outer surface 5a of the bead core 5 is more preferably 5 to 10 mm.

In the present embodiment, the inner end 9a of the anisotropic sheet 9A is disposed between the body portion 6a of the carcass 6 and the bead apex rubber 8. The anisotropic sheet 9A having such a structure allows enhancement of stiffness of the bead portion 4, so that the tire 1 allows steering stability to be improved.

The inner end 9a of the anisotropic sheet 9A may be, for example, disposed between the turned-up portion 6b of the carcass 6 and the bead apex rubber 8, which is not shown. In this case, the anisotropic sheet 9A allows enhancement of stiffness on the outer side of the bead portion 4 in the tire axial direction, and the tire 1 allows steering stability to be further improved.

In the present embodiment, the outer end 9b of the anisotropic sheet 9A is disposed inwardly of an end portion 6c of the turned-up portion 6b in the tire radial direction. The anisotropic sheet 9A having such a structure allows the outer end 9b to be enclosed by the carcass 6, so that variation of stiffness is dispersed and the tire 1 allows ride comfort to be improved.

A distance d2 in the tire radial direction between the outer end 9b of the anisotropic sheet 9A and the end portion 6c of the turned-up portion 6b is preferably 3 to 15 mm. In a case where the distance d2 between the outer end 9b of the anisotropic sheet 9A and the end portion 6c of the turned-up portion 6b is not less than 3 mm, strain occurring in the anisotropic sheet 9A can be reduced. In a case where the distance d2 between the outer end 9b of the anisotropic sheet 9A and the end portion 6c of the turned-up portion 6b is not greater than 15 mm, stiffness near the outer end 9b of the anisotropic sheet 9A can be ensured. From such a viewpoint, the distance d2 between the outer end 9b of the anisotropic sheet 9A and the end portion 6c of the turned-up portion 6b is more preferably 5 to 10 mm.

In the present embodiment, the outer end 9b of the anisotropic sheet 9A is disposed outwardly of a tire-radially outer end 8a of the bead apex rubber 8 in the tire radial direction. The anisotropic sheet 9A having such a structure allows stiffness to be enhanced in a wider range, so that the tire 1 allows steering stability to be further improved.

A distance d3 in the tire radial direction between the outer end 9b of the anisotropic sheet 9A and the outer end 8a of the bead apex rubber 8 is preferably 10 to 20 mm. In a case where the distance d3 between the outer end 9b of the anisotropic sheet 9A and the outer end 8a of the bead apex rubber 8 is not less than 10 mm, the tire 1 allows ride comfort to be improved. In a case where the distance d3 between the outer end 9b of the anisotropic sheet 9A and the outer end 8a of the bead apex rubber 8 is not greater than 20 mm, the tire 1 allows steering stability to be improved.

As shown in FIG. 1 and FIG. 2, the outer end 9b of the anisotropic sheet 9A is preferably disposed near a maximum tire width position 10. The anisotropic sheet 9A having such a structure allows the tire 1 to improve steering stability and ride comfort in a well-balanced manner. The maximum tire width position 10 is a position at which the distance of a tire profile in the tire axial direction is maximum excluding a projection or the like.

In the present embodiment, the outer end 9b of the anisotropic sheet 9A is disposed inwardly of the maximum tire width position 10 in the tire radial direction. The anisotropic sheet 9A having such a structure inhibits stiffness from becoming excessively high and allows the tire 1 to improve ride comfort.

A distance d4 in the tire radial direction between the outer end 9b of the anisotropic sheet 9A and the maximum tire width position 10 is preferably 3 to 7 mm. In a case where the distance d4 between the outer end 9b of the anisotropic sheet 9A and the maximum tire width position 10 is not less than 3 mm, the tire 1 allows ride comfort to be improved. In a case where the distance d4 between the outer end 9b of the anisotropic sheet 9A and the maximum tire width position 10 is not greater than 7 mm, the tire 1 allows steering stability to be improved.

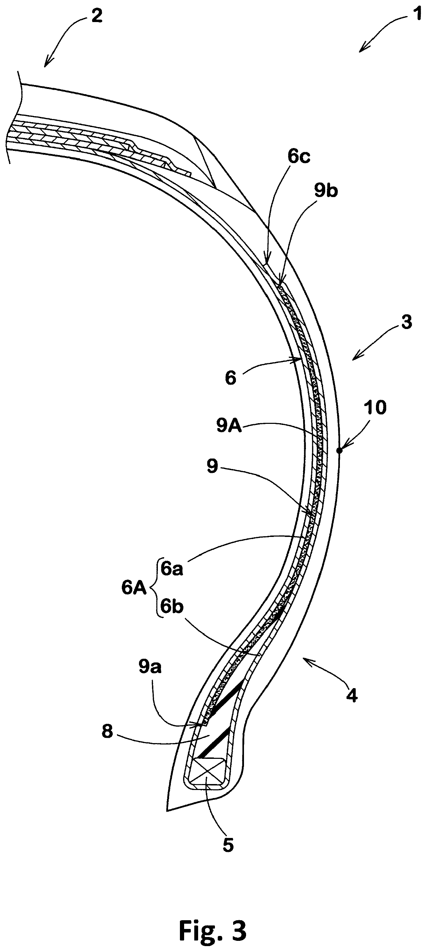

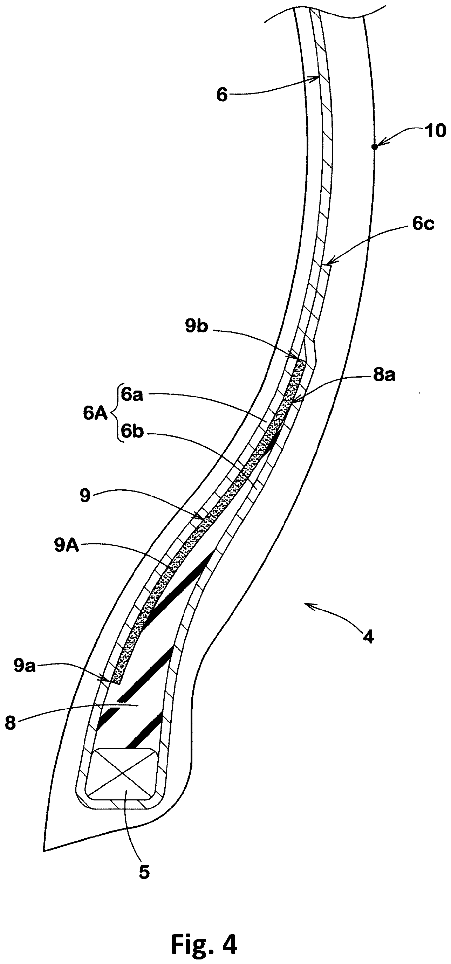

FIG. 3 is an enlarged cross-sectional view of the tire 1 according to another embodiment. FIG. 4 is an enlarged cross-sectional view of the bead portion 4 according to another embodiment. For example, the outer end 9b of the anisotropic sheet 9A may be disposed outwardly of the maximum tire width position 10 in the tire radial direction in a case where focus is placed on steering stability provided by the tire 1, as shown in FIG. 3. For example, the outer end 9b of the anisotropic sheet 9A may be disposed near the outer end 8a of the bead apex rubber 8 in a case where focus is placed on ride comfort provided by the tire 1, as shown in FIG. 4. Also in these cases, the outer end 9b of the anisotropic sheet 9A is preferably disposed inwardly of the end portion 6c of the turned-up portion 6b in the tire radial direction.

As shown in FIG. 1 and FIG. 2, a length L of the anisotropic sheet 9A in the tire radial direction is preferably 20% to 60% of a cross-sectional height H of the tire 1. In a case where the length L of the anisotropic sheet 9A is not less than 20% of the cross-sectional height H of the tire 1, stiffness of the sidewall portion 3 and the bead portion 4 can be appropriately improved, and the tire 1 allows steering stability to be improved. In a case where the length L of the anisotropic sheet 9A is not greater than 80% of the cross-sectional height H of the tire 1, stiffness of the sidewall portion 3 and the bead portion 4 can be inhibited from becoming excessively high, and the tire 1 allows ride comfort to be improved. From such a viewpoint, the length L of the anisotropic sheet 9A in the tire radial direction is more preferably 30% to 50% of the cross-sectional height H of the tire 1.

A length of a region in which the anisotropic sheet 9A and the bead apex rubber 8 overlap each other, that is, a distance d5 in the tire radial direction from the inner end 9a of the anisotropic sheet 9A to the outer end 8a of the bead apex rubber 8 is preferably 10% to 90% of the length L of the anisotropic sheet 9A in the tire radial direction. In a case where the distance d5 from the inner end 9a of the anisotropic sheet 9A to the outer end 8a of the bead apex rubber 8 is not less than 10% of the length L of the anisotropic sheet 9A, the tire 1 allows steering stability to be improved. In a case where the distance d5 from the inner end 9a of the anisotropic sheet 9A to the outer end 8a of the bead apex rubber 8 is not greater than 90% of the length L of the anisotropic sheet 9A, the tire 1 allows ride comfort to be improved. From such a viewpoint, the distance d5 from the inner end 9a of the anisotropic sheet 9A to the outer end 8a of the bead apex rubber 8 is more preferably 30% to 70% of the length L of the anisotropic sheet 9A.

In the anisotropic sheet 9A of the present embodiment, a complex elastic modulus Ea* at 70°C in the tire circumferential direction is greater than a complex elastic modulus Eb* at 70°C in the tire radial direction. In the anisotropic sheet 9A having such a structure, stiffness in the tire circumferential direction is higher than stiffness in the tire radial direction, so that both steering stability to which stiffness in the tire circumferential direction greatly contributes and ride comfort to which stiffness in the tire radial direction greatly contributes can be achieved.

Each of the complex elastic moduli Ea* and Eb* of the anisotropic sheet 9A at 70°C is indicated as a value measured in compliance with the standard of JIS-K6394 by using a viscoelasticity spectrometer manufactured by Iwamoto Seisakusho under the following conditions.
Initial strain: 10%
Amplitude of dynamic strain: ±1%
Frequency: 10 Hz
Deformation mode: tension
Measurement temperature: 70°C

In the anisotropic sheet 9A, the complex elastic modulus Ea* at 70°C in the tire circumferential direction is preferably 110% to 170% of the complex elastic modulus Eb* at 70°C in the tire radial direction. In a case where the complex elastic modulus Ea* in the tire circumferential direction is not less than 110% of the complex elastic modulus Eb* in the tire radial direction in the anisotropic sheet 9A, the difference between the complex elastic modulus in the tire circumferential direction and the complex elastic modulus in the tire radial direction allows the tire 1 to provide both steering stability and ride comfort. In a case where the complex elastic modulus Ea* in the tire circumferential direction is not greater than 170% of the complex elastic modulus Eb* in the tire radial direction in the anisotropic sheet 9A, anisotropy can be inhibited from becoming excessive. From such a viewpoint, the complex elastic modulus Ea* in the tire circumferential direction is more preferably 120% to 150% of the complex elastic modulus Eb* in the tire radial direction in the anisotropic sheet 9A.

In the present embodiment, the anisotropic sheet 9A contains a rubber component. Preferable examples of the rubber component of the anisotropic sheet 9A include isoprene-based rubber such as isoprene rubber (IR) and natural rubber (NR), and diene-based rubber such as styrene butadiene rubber (SBR) and butadiene rubber (BR). The rubber component of the anisotropic sheet 9A may include, for example, styrene-isoprene-butadiene copolymer rubber (SIBR), a styrene-isobutylene-styrene block copolymer (SIBS), chloroprene rubber (CR), acrylonitrile-butadiene rubber (NBR), hydrogenated nitrile rubber (HNBR), isobutylene-isoprene rubber (IIR), ethylene-propylene rubber, polynorbornene rubber, silicone rubber, chlorinated polyethylene rubber, fluororubber (FKM), acrylic rubber (ACM), and hydrin rubber.

The anisotropic sheet 9A of the present embodiment contains a biomass nanomaterial. In the description herein, the biomass nanomaterial refers to a shape-anisotropic organism-derived material having a nano-order diameter, and is preferably formed of, for example, a fiber derived from a plant or an animal. The anisotropic sheet 9A may include, for example, an organic fiber such as a polyvinyl alcohol (PVA) fiber, an aramid fiber, a polyester fiber, and a nylon fiber, an inorganic fiber such as a glass fiber, a carbon fiber, and a metal fiber, and a whisker such as a polymer whisker, a metal whisker, and a ceramic whisker.

The anisotropic sheet 9A preferably contains 1 to 40 parts by mass of the biomass nanomaterial per 100 parts by mass of the rubber component. In a case where the biomass nanomaterial is contained in an amount of not less than one part by mass per 100 parts by mass of the rubber component, the anisotropic sheet 9A can have anisotropy. In a case where the biomass nanomaterial is contained in an amount of not greater than 40 parts by mass per 100 parts by mass of the rubber component, reduction of breaking strength of the anisotropic sheet 9A can be inhibited.

The average diameter of the biomass nanomaterial is preferably 1 to 2000 nm. In a case where the average diameter of the biomass nanomaterial is not less than 1 nm, stiffness and processability of the anisotropic sheet 9A can be enhanced. In a case where the average diameter of the biomass nanomaterial is not greater than 2000 nm, stiffness of the anisotropic sheet 9A can be inhibited from becoming excessively high.

The average length of the biomass nanomaterial is preferably 0.1 to 10 µm. In a case where the average length of the biomass nanomaterial is not less than 0.1 µm, the anisotropic sheet 9A can have anisotropy. In a case where the average length of the biomass nanomaterial is not greater than 10 µm, stiffness of the anisotropic sheet 9A can be inhibited from becoming excessively high.

An aspect ratio (the average length/the average diameter) of the biomass nanomaterial is preferably 2 to 500. In a case where the aspect ratio (the average length/the average diameter) of the biomass nanomaterial is not less than 2, the anisotropic sheet 9A can have anisotropy. In a case where the aspect ratio (the average length/the average diameter) of the biomass nanomaterial is not greater than 500, reduction of the breaking strength of the anisotropic sheet 9A can be inhibited.

As the biomass nanomaterial, for example, an organism-derived fiber material made of nanocellulose, a chitin nanofiber, a chitosan nanofiber, or the like is preferably used. The biomass nanomaterial preferably contains nanocellulose. Such a biomass nanomaterial has good processabiltiy and allows production cost to be reduced.

Examples of the nanocellulose include a cellulose nanofiber (CNF) and a cellulose nanocrystal (CNC). The nanocellulose preferably contains a cellulose nanofiber (CNF). Such nanocellulose has good processability and allows production cost to be reduced.

A material of the cellulose nanofiber (CNF) is preferably a plant-derived cellulose microfibril or a fiber formed of the microfibrils. The cellulose nanofiber (CNF) may include, for example, bacterial cellulose (BC), a lignocellulose nanofiber (LCNF), or an electrospun nanofiber.

In the anisotropic sheet 9A of the present embodiment, the biomass nanomaterial is extruded by using an extruder so as to be directed in the transfer direction, that is, the grain direction. Therefore, in a case where the anisotropic sheet 9A is disposed on the carcass 6 such that the extruding direction (grain direction) coincides with the tire circumferential direction, the biomass nanomaterial can be directed in the tire circumferential direction. In the anisotropic sheet 9A having such a structure, the complex elastic modulus Ea* at 70°C in the tire circumferential direction can be easily made greater than the complex elastic modulus Eb* at 70°C in the tire radial direction.

Although the particularly preferred embodiment of the present invention has been described above in detail, the present invention is not limited to the above-described embodiment, and various modifications can be made within the scope of the appended claims.

### [Examples]

Sample tires having the tire meridian cross-section shown in FIG. 1 were produced according to the specifications indicated in Table 1. The sample tires were evaluated for steering stability and ride comfort. The specifications common to the sample tires and the test method were as follows.

### <Common specifications>

Test vehicle: front-wheel-drive hybrid passenger car
Tire size: 195/65R15
Internal pressure: 230 kPa

### <Steering stability>

The sample tires were mounted to all wheels of the test vehicle. One test driver rode in the test vehicle and drove the test vehicle on a test course, and then made sensory evaluation for steering stability. The results are indicated as indexes with the index of comparative example 1 being 100. The greater the value is, the more excellent steering stability is.

### <Ride comfort>

The sample tires were mounted to all wheels of the test vehicle. One test driver rode in the test vehicle and drove the test vehicle on a test course, and then made sensory evaluation for ride comfort. The results are indicated as indexes with the index of comparative example 1 being 100. The greater the value is, the more excellent ride comfort is.

The test results are indicated in Table 1.

**[Table 1]**

| | Comp. 1 | Comp. 2 | Ex. 1 | Ex. 2 | Ex. 3 | Ex. 4 | Ex. 5 |
|---|---|---|---|---|---|---|---|
| Presence or absence of reinforcing layer | Absent | Present | Present | Present | Present | Present | Present |
| Presence or absence of anisotropic sheet | Absent | Absent | Present | Present | Present | Present | Present |
| Ratio (L/H) (%) of length L of reinforcing layer to tire cross-sectional height H | - | 40 | 40 | 20 | 60 | 40 | 40 |
| Distance d1 (mm) between inner end of reinforcing layer and outer surface of bead core | - | 7 | 7 | 7 | 7 | 3 | 15 |
| Distance d2 (mm) between outer end of reinforcing layer and end portion of turned-up portion | - | 7 | 7 | 7 | 7 | 3 | 15 |
| Steering stability (index) | 100 | 105 | 105 | 101 | 107 | 105 | 101 |
| Ride comfort (index) | 100 | 95 | 105 | 107 | 100 | 100 | 105 |

According to the test results, it was confirmed that the tires of examples allowed both steering stability and ride comfort to be achieved at a higher level than the tires of comparative examples.

## Claims

1. A tire (1) comprising:
a carcass (6) extending on and between a pair of bead cores (5);
a pair of reinforcing layers (9) extending along the carcass (6), and
a pair of bead apex rubbers (8) extending outwardly from the bead cores (5), respectively, in the tire radial direction,
wherein the carcass (6) comprises at least one carcass ply (6A) having a body portion (6a) extending on and between the pair of bead cores (5), and turned-up portions (6b) connected to the body portion 6a and turned up around the bead cores (5),
wherein each of the reinforcing layers (9) comprises at least one anisotropic sheet (9A) in which viscoelasticity in a tire circumferential direction and viscoelasticity in a tire radial direction are different from each other,
wherein an inner end (9a) of the anisotropic sheet (9A) in the tire radial direction is disposed between the body portion (6a) and a corresponding one of the bead apex rubbers (8), and
wherein an outer end (9b) of the anisotropic sheet (9A) in the tire radial direction is disposed between the body portion (6a) and a corresponding one of the turned-up portions (6b),
**characterized in that**
the outer end (9b) of the anisotropic sheet (9A) is disposed outwardly of a tire-radially outer end (8a) of a corresponding one of the bead apex rubbers (8) in the tire radial direction.

2. The tire (1) according to claim 1, wherein a distance (d2) in the tire radial direction between the outer end (9b) of the anisotropic sheet (9A) and an end portion (6c) of a corresponding one of the turned-up portions (6b) is 3 to 15 mm.

3. The tire (1) according to claim 1 or 2, wherein the inner end (9a) of the anisotropic sheet (9A) in the tire radial direction is disposed outwardly of a tire-radially outer surface (5a) of a corresponding one of the bead cores (5) in the tire radial direction.

4. The tire (1) according to claim 3, wherein a distance (d1) in the tire radial direction between the inner end (9a) of the anisotropic sheet (9A) and the outer surface (5a) of a corresponding one of the bead cores (5) is 3 to 15 mm.

5. The tire (1) according to any one of claims 1 to 4, wherein, in the anisotropic sheet (9A), a complex elastic modulus (Ea*) at 70°C in the tire circumferential direction is greater than a complex elastic modulus (Eb*) at 70°C in the tire radial direction, when the complex elastic modulus (Ea*) at 70°C in the tire circumferential direction and the complex elastic modulus (Eb*) at 70°C in the tire radial direction C each is indicated as a value measured in compliance with the standard of JIS-K6394 by using a viscoelasticity spectrometer manufactured by Iwamoto Seisakusho under conditions of the initial strain being 10%, the amplitude of dynamic strain being ±1%, the frequency being 10 Hz, the deformation mode being tension and the measurement temperature being 70°C.

6. The tire (1) according to claim 5, wherein, in the anisotropic sheet (9A), the complex elastic modulus (Ea*) at 70°C in the tire circumferential direction is 110% to 170% of the complex elastic modulus (Eb*) at 70°C in the tire radial direction.

7. The tire (1) according to any one of claims 1 to 6, wherein the anisotropic sheet (9A) comprises a biomass nanomaterial.

8. The tire (1) according to claim 7, wherein the biomass nanomaterial comprises nanocellulose.

## Patentansprüche

1. Reifen (1), umfassend:
eine Karkasse (6), die sich auf und zwischen einem Paar Wulstkernen (5) erstreckt;
ein Paar Verstärkungsschichten (9), die sich entlang der Karkasse (6) erstrecken, und
ein Paar Wulstkernreitergummis (8), die sich jeweils von den Wulstkernen (5) in der Reifenradialrichtung nach außen erstrecken,
wobei die Karkasse (6) mindestens eine Karkasslage (6A) mit einem Körperabschnitt (6a), der sich auf und zwischen dem Paar Wulstkernen (5) erstreckt, und Umschlagabschnitten (6b), die mit dem Körperabschnitt (6a) verbunden und um die Wulstkerne (5) herum umgeschlagen sind, umfasst,
wobei jede der Verstärkungsschichten (9) mindestens eine anisotrope Platte (9A) umfasst, bei der die Viskoelastizität in einer Reifenumfangsrichtung und die Viskoelastizität in einer Reifenradialrichtung voneinander verschieden sind,
wobei ein inneres Ende (9a) der anisotropen Platte (9A) in der Reifenradialrichtung zwischen dem Körperabschnitt (6a) und einem entsprechenden der Wulstkernreitergummis (8) angeordnet ist, und
wobei ein äußeres Ende (9b) der anisotropen Platte (9A) in der Reifenradialrichtung zwischen dem Körperabschnitt (6a) und einem entsprechenden der Umschlagabschnitte (6b) angeordnet ist,
**dadurch gekennzeichnet, dass**
das äußere Ende (9b) der anisotropen Platte (9A) in der Reifenradialrichtung außen von einem reifenradial äußeren Ende (8a) eines entsprechenden der Wulstkernreitergummis (8) angeordnet ist.

2. Reifen (1) nach Anspruch 1, wobei ein Abstand (d2) in der Reifenradialrichtung zwischen dem äußeren Ende (9b) der anisotropen Platte (9A) und einem Endabschnitt (6c) eines entsprechenden der Umschlagabschnitte (6b) 3 bis 15 mm beträgt.

3. Reifen (1) nach Anspruch 1 oder 2, wobei das innere Ende (9a) der anisotropen Platte (9A) in der Reifenradialrichtung außen von einer reifenradial äußeren Fläche (5a) eines entsprechenden der Wulstkerne (5) in der Reifenradialrichtung angeordnet ist.

4. Reifen (1) nach Anspruch 3, wobei ein Abstand (d1) in der Reifenradialrichtung zwischen dem inneren Ende (9a) der anisotropen Platte (9A) und der äußeren Fläche (5a) eines entsprechenden der Wulstkerne (5) 3 bis 15 mm beträgt.

5. Reifen (1) nach einem der Ansprüche 1 bis 4, wobei in der anisotropen Platte (9A) ein komplexer Elastizitätsmodul (Ea*) bei 70°C in der Reifenumfangsrichtung größer ist als ein komplexer Elastizitätsmodul (Eb*) bei 70°C in der Reifenradialrichtung, wenn der komplexe Elastizitätsmodul (Ea*) bei 70°C in der Reifenumfangsrichtung und der komplexe Elastizitätsmodul (Eb*) bei 70°C in der Reifenradialrichtung C jeweils als ein Wert angegeben ist, der in Übereinstimmung mit dem Standard JIS-K6394 unter Verwendung eines von Iwamoto Seisakusho hergestellten Viskoelastizitätsspektrometers unter Bedingungen gemessen ist, dass die Anfangsdehnung 10 % beträgt, die Amplitude der dynamischen Dehnung ±1 % beträgt, die Frequenz 10 Hz beträgt, der Verformungsmodus Spannung ist und die Messtemperatur 70°C beträgt.

6. Reifen (1) nach Anspruch 5, wobei in der anisotropen Platte (9A) der komplexe Elastizitätsmodul (Ea*) bei 70°C in der Reifenumfangsrichtung 110% bis 170% des komplexen Elastizitätsmoduls (Eb*) bei 70°C in der Reifenradialrichtung beträgt.

7. Reifen (1) nach einem der Ansprüche 1 bis 6, wobei die anisotrope Platte (9A) ein Biomasse-Nanomaterial umfasst.

8. Reifen (1) nach Anspruch 7, wobei das Biomasse-Nanomaterial Nanocellulose umfasst.

## Revendications

1. Pneumatique (1) comprenant :
une carcasse (6) s'étendant sur et entre une paire d'âmes de talon (5) ;
une paire de couches de renforcement (9) s'étendant le long de la carcasse (6), et
une paire de caoutchoucs de sommet de talon (8) s'étendant vers l'extérieur depuis les âmes de talon (5), respectivement, dans la direction radiale du pneumatique,
dans lequel la carcasse (6) comprend au moins une nappe de carcasse (6A) ayant une portion formant corps (6a) s'étendant sur et entre la paire d'âmes de talon (5), et des portions retroussées (6b) connectées à la portion formant corps (6a) et retroussées autour des âmes de talon (5),
dans lequel chacune des couches de renforcement (9) comprend au moins une feuille anisotrope (9A) dans laquelle une viscoélasticité dans une direction circonférentielle du pneumatique et une viscoélasticité dans une direction radiale du pneumatique sont différentes l'une de l'autre,
dans lequel une extrémité intérieure (9a) de la couche anisotrope (9A) dans la direction radiale du pneumatique est disposée entre la portion formant corps (6a) et un caoutchouc correspondant des caoutchoucs de sommet de talon (8), et
dans lequel une extrémité extérieure (9b) de la couche anisotrope (9A) dans la direction radiale du pneumatique est disposée entre la portion formant corps (6a) et une portion correspondante des portions retroussées (6b),
**caractérisé en ce que**
l'extrémité extérieure (9b) de la couche anisotrope (9A) est disposée à l'extérieur d'une extrémité radialement extérieure du pneumatique (8a) d'un caoutchouc correspondant des caoutchoucs de sommet de talon (8) dans la direction radiale du pneumatique.

2. Pneumatique (1) selon la revendication 1, dans lequel une distance (d2) dans la direction radiale du pneumatique entre l'extrémité extérieure (9b) de la couche anisotrope (9A) et une portion d'extrémité (6c) d'une portion correspondante des portions retroussées (6b) est de 3 à 15 mm.

3. Pneumatique (1) selon la revendication 1 ou 2, dans lequel l'extrémité intérieure (9a) de la couche anisotrope (9A) dans la direction radiale du pneumatique est disposée à l'extérieur d'une surface radialement extérieure du pneumatique (5a) d'une âme correspondante des âmes de talon (5) dans la direction radiale du pneumatique.

4. Pneumatique (1) selon la revendication 3, dans lequel une distance (d1) dans la direction radiale du pneumatique entre l'extrémité intérieure (9a) de la couche anisotrope (9A) et la surface extérieure (5a) d'une âme correspondante des âmes de talon (5) est de 3 à 15 mm.

5. Pneumatique (1) selon l'une quelconque des revendications 1 à 4, dans lequel, dans la couche anisotrope (9A), un module d'élasticité complexe (Ea*) à 70 °C dans la direction circonférentielle du pneumatique est supérieur à un module d'élasticité complexe (Eb*) à 70 °C dans la direction radiale du pneumatique, quand le module d'élasticité complexe (Ea*) à 70 °C dans la direction circonférentielle du pneumatique et le module d'élasticité complexe (Eb*) à 70° dans la direction radiale du pneumatique sont chacun indiqués comme une valeur mesurée en conformité avec les standards de la norme industrielle japonaise JIS-K6394 en utilisant un spectromètre de viscoélasticité fabriqué par Iwamoto Seisakusho dans des conditions selon lesquelles la contrainte initiale est de 10 %, l'amplitude de contrainte dynamique est de ±1 %, la fréquence est de 10 Hz, le mode de déformation est la tension et la température de mesurage est de 70 °C.

6. Pneumatique (1) selon la revendication 5, dans lequel, dans lequel, dans la couche anisotrope (9A), le module d'élasticité complexe (Ea*) à 70 °C dans la direction circonférentielle du pneumatique est de 110 % à 170 % du module d'élasticité complexe (Eb*) à 70 °C dans la direction radiale du pneumatique.

7. Pneumatique (1) selon l'une quelconque des revendications 1 à 6, dans lequel la couche anisotrope (9A) comprend un nanomatériau à base de biomasse.

8. Pneumatique (1) selon la revendication 7, dans lequel le nanomatériau à base de biomasse comprend de la nanocellulose.
